# DEMANDE DE BREVET EUROPEEN

(11) **EP 1 806 933 A2**
(43) Date de publication de la demande: **11.07.2007**
(21) Numéro de dépôt: 07000109.4
(22) Date de dépôt: 04.01.2007
(51) Int. Cl.: H04N 13/00

(54) **Procédé d'interaction en temps réel avec des images virtuelles en relief**

(30) Priorité: 04.01.2006 FR 0600040
(71) Demandeur: Frison, Laurence, 75018 Paris (FR); Szajner, Bernard, London SW18 2AR (GB)
(72) Inventeur: Frison, Laurence, 75018 Paris (FR); Szajner, Bernard, London SW18 2AR (GB)
(74) Mandataire: Louiset, Raphael

(57) **Abrégé**

Procédé d'interaction avec une projection d'images en relief selon un déroulement non devinable par le ou les observateurs (1), ce procédé comprenant une étape de détection par au moins un capteur (5) de mouvements d'un observateur (1) et une étape de traitement des données issues dudit capteur (5), ce procédé comprenant une étape de corrélation entre les données issues du capteur de mouvements et un déroulement non devinable de projection d'images, ce déroulement non devinable étant choisi parmi les scenarii contenus dans une base de données, ou calculé en tempes réel.

## Description

### Domaine technique

L'invention concerne un procédé permettant le contrôle en temps réel d'images en relief, par un ou plusieurs observateurs.

Le terme « relief » désigne ici une image dont la perception du volume se fait en avant par rapport au plan d'un écran, image dite jaillissante, ou en arrière par rapport au plan d'un écran, image dite rentrante, par opposition aux termes « trois dimensions », ou « tridimensionnels », aujourd'hui communément utilisés, notamment par les professionnels du dessin animé ou des jeux vidéo, pour désigner des objets que l'oeil perçoit en « volume », mais qui restent confinés au plan même d'un écran.

### Art antérieur

Le brevet US 6 031 519 décrit le remplacement d'un écran conventionnel d'ordinateur par un dispositif interface homme/hologramme.

Un appareil nommé « holographic display unit » émet une image holographique du bureau de l'ordinateur.

Un observateur placé face à cet hologramme peut, en pointant une zone de l'espace, faire apparaître une image holographique des menus déroulants.

A la connaissance des présents inventeurs, il n'existe pas de système holographique permettant de générer une image perpendiculaire au plan de l'hologramme tel que représenté sur les figures 1 et 2 de ce document antérieur US 6 031 519.

### Problèmes techniques à résoudre

En tout état de cause, la technique décrite dans le document US 6 031 519 présente de nombreux inconvénients.

En premier lieu, un hologramme agit conne une « fenêtre », c'est-à-dire que l'oeil de l'observateur doit se trouver relativement perpendiculaire à l'hologramme afin de voir l'image en reflet.

La technique décrite dans le document US 6 031 519 ne permet donc pas, en pratique, l'intervention de plusieurs observateurs, et ce d'autant que l'hologramme est de faibles dimensions.

En deuxième lieu, le contenu de l'image holographique est immanquablement sans possibilité de mouvements ou doué de peu de mouvements.

Le contenu même de l'image ne pourra pas être modifié sans recourir à des processus lourds et lents, parce qu'assujettis à des changements physiques successifs d'hologrammes.

En troisième lieu, le rendu chromatique de l'hologramme est de faible qualité car lié à la chimie du procédé.

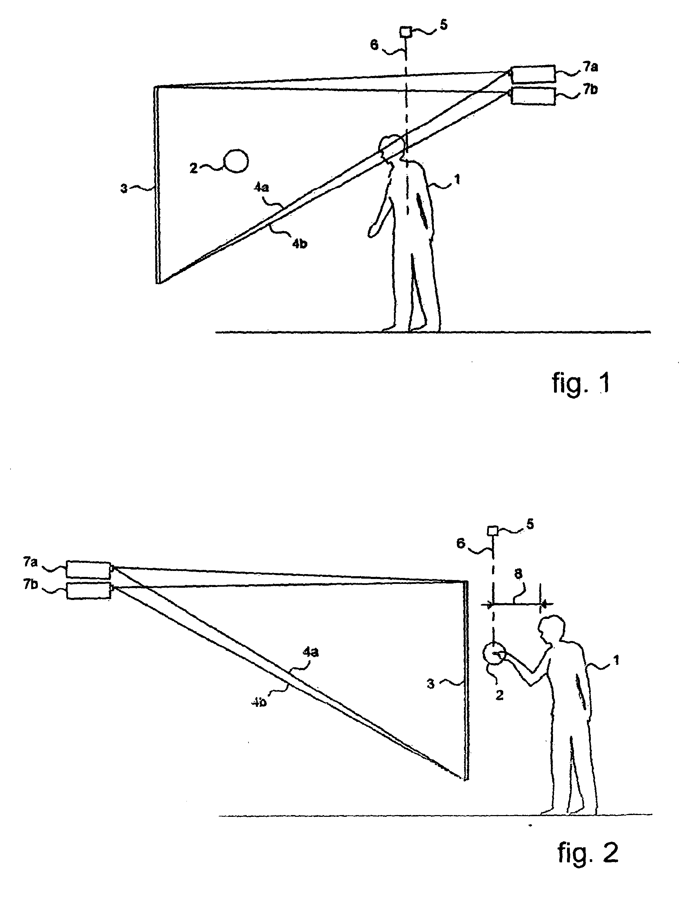

On connaît par ailleurs des systèmes de projection stéréoscopique. La figure 1 est une vue schématique, de côté, d'un système de ce type, en mode frontal.

Les images stéréoscopiques sont généralement formées d'un couple d'images séparées, superposant l'image fabriquée pour l'oeil gauche et l'image fabriquée pour l'oeil droit, images qui reconstituent la différence de vision angulaire des deux yeux, vision angulaire due à la séparation physique des deux yeux.

Afin de permettre cette vision stéréoscopique, divers systèmes sont utilisés, le plus courant nécessitant le port de lunettes équipées de filtres polarisants permettant à l'oeil gauche et à l'oeil droit de ne voir uniquement que l'image qui leur est spécifiquement destinée.

Dans un tel système de projection frontale, si l'on souhaite générer une interaction avec l'image virtuelle, la mise en place, à cet effet, d'un capteur 5 décelant les mouvements d'un observateur 1 pour entraîner, par des moyens non représentés, un mouvement de l'image virtuelle jaillissante 2 issue de l'écran 3, pose les problèmes techniques suivants.

En premier lieu, cette configuration de projection frontale ne permet pas de sensation d'immersion dans l'image.

De plus, cette configuration de projection frontale ne permet pas de discriminer l'action volontaire de l'action involontaire de l'observateur 1.

L'observateur 1 observe une image virtuelle jaillissante 2 issue de l'écran 3. Par « image virtuelle jaillissante », on désigne ici, par exemple, toute image animée d'objet minéral, animal, végétal, mécanique, humain, ainsi matérialisé en relief jaillissant. L'observateur 1 se trouve obligé d'être à une distance importante de cet écran 3. Dans le cas contraire, le corps de l'observateur ferait obstacle aux faisceaux 4a et 4b issus des projecteurs 7a et 7b, l'intrusion du corps de l'observateur 1 interférant avec la projection des images et empêchant ainsi une visualisation correcte de ces images.

L'obligation de maintenir l'observateur 1 à une distance importante de l'écran 3 pour que son corps ne puisse interférer avec la projection, impose de placer le capteur 5 à grande distance de l'écran 3. Si l'image virtuelle jaillissante 2 produit la sensation de reculer au fur et à mesure que l'observateur 1 s'en approche, l'observateur 1 tendra à s'approcher de cette image jaillissante 2 et ce faisant risquera d'obturer par son corps les faisceaux 4a, 4b issus des projecteurs 7a, 7b.

Il existe donc un risque que, voulant s'approcher de l'image virtuelle jaillissante 2, l'observateur 1 fasse entrer son corps dans le volume de détection 6 - la zone de détection où le capteur 5 est opérant - avant même que l'image virtuelle jaillissante 2 ne semble à portée de sa main. Cette modification prématurée du scénario contrarie la perception d'interactivité car la modification du scénario ne résulte pas d'un geste volontaire de l'observateur en direction de l'image virtuelle jaillissante 2 mais de la seule position spatiale de l'observateur 1.

Le document US 2003/0142068 décrit un procédé de projection d'une image stéréoscopique, en particulier d'un livre ouvert, dans un espace observable par un utilisateur, cette image stéréoscopique étant une image d'interface pour un ordinateur, la détermination de l'intersection entre un objet physique et cette image d'interface permettant la génération d'un signal de contrôle. Ce signal de contrôle permet la commande d'une imprimante ou d'un modem, ou bien encore la commande de l'affichage de l'image stéréoscopique. La technique décrite dans le document US 2003/0142068 présente de nombreux inconvénients. Elle ne permet pas, en particulier, l'intervention de plusieurs observateurs.

### Objets de l'invention

La présente invention vise notamment à pallier les inconvénients précités.

Ainsi, l'un des objets de la présente invention est de fournir un procédé de contrôle d'images en relief par un ou plusieurs observateurs, ce procédé permettant un changement rapide du contenu des images en relief par suite de sollicitations du ou des observateurs, le rendu qualitatif de l'image pouvant être incomparablement supérieur à celui des hologrammes.

La présente invention a aussi pour objet de permettre une grande flexibilité dans l'animation des images en relief, sans limitation quand à la dimension de ces images.

La présente invention vise également à proposer une solution simple et économique permettant de visualiser des images en relief dont une partie est perçue par l'observateur comme « émergeant » de l'écran, cette partie jaillissante étant destinée à une fonction interactive.

### Présentation générale de l'invention

A ces fins, l'invention se rapporte, selon un premier aspect, à un procédé d'interaction avec une projection d'images en relief selon un déroulement non devinable par le ou les observateurs, ce procédé comprenant une étape de détection par au moins un capteur de mouvements d'un observateur et une étape de traitement des données issues dudit capteur, ce procédé comprenant une étape de corrélation entre les données issues du capteur de mouvements et un déroulement non devinable de projection d'images.

Dans une mise en oeuvre, ce déroulement non devinable est choisi parmi les scenarii contenus dans une base de données.

Dans une mise en oeuvre, ce déroulement d'images non devinable est calculé en temps réel.

Avantageusement, le scénario auditif est modifié de façon sensiblement synchrone au scénario visuel.

L'invention se rapporte, selon un deuxième aspect, à un dispositif d'interaction avec une projection d'images en relief selon un déroulement non devinable par le ou les observateurs, ce dispositif comprenant au moins un volume de détection de mouvements d'un observateur, ledit volume étant pourvu d'au moins un capteur de mouvement, ce dispositif comprenant en outre des moyens de traitement des données issues dudit capteur de mouvement, ce dispositif comprenant une base de données de scénarii prédéterminés de projection d'images en relief et des moyens aptes à assurer une corrélation entre les données issues du capteur de mouvement et un déroulement non devinable de projection d'images, ce déroulement non devinable étant choisi parmi les scénarii contenus dans la base de données.

Le dispositif présente, dans diverses réalisations, les caractères suivants, le cas échéant combinés :
- la projection des images en relief met en oeuvre un moyen choisi parmi le groupe comprenant les écrans lenticulaires, les écrans à changement séquence oeil droit/oeil gauche, les écrans à changement séquencé de polarisation ;
- la projection est assurée par des moyens de rétro projection stéréoscopiques ;
- le dispositif comprend au moins un volume de détection de mouvements disposé entre l'emplacement prédéterminé du corps du ou des observateurs et un écran de projection des images ;
- ledit capteur de mouvement est choisi parmi le groupe comprenant les barrières photo électriques, les capteurs de proximité, les capteurs de présence ;
- ledit capteur est une caméra, le dispositif comprenant des moyens de reconnaissance de forme ;
- le dispositif comprend quatre volumes de détection de mouvement, deux volumes étant disposés sensiblement suivant un axe horizontal, deux autres volumes étant disposés suivant un axe sensiblement vertical;
- le dispositif comprend au moins deux écrans de projection d'images en relief, au moins un des écrans n'étant pas perpendiculaire au sol.

### Liste des figures

D'autres objets et avantages de l'invention apparaîtront au cours de la description suivante de modes de réalisation, description qui va être effectuée en se référant aux dessins annexés dans lesquels:
- la figure 1 est une vue schématique, de côté, d'un système de projection stéréoscopique en mode frontal ;
- la figure 2 est une vue schématique, de côté, d'un mode particulier de réalisation du procédé selon l'invention utilisant une rétro-projection stéréoscopique ;
- la figure 3 est une vue schématique, de côté, d'un procédé selon l'invention, dans une configuration particulière, montrant que le procédé s'adapte à des personnes de taille différente ;
- la figure 4 est une vue schématique, frontale, d'un mode particulier de réalisation du procédé selon l'invention, montrant quatre capteurs et permettant plus de choix dans le contrôle interactif de l'image;
- la figure 5 est une vue schématique, frontale, d'un mode particulier de réalisation du procédé selon l'invention, montrant une variante de la figure 4, variante permettant une utilisation particulière du contrôle en temps réel de l'image;
- la figure 6 est une vue schématique, de côté, d'un mode particulier de réalisation du procédé selon l'invention, montrant une application où le ou les écrans ne sont pas perpendiculaires au sol ;
- la figure 7 est une vue schématique, de côté, d'un mode particulier de réalisation du procédé selon l'invention, montrant une application où le capteur utilisé est une caméra associée à un logiciel de reconnaissance de formes et de mouvements ;
- la figure 8 représente un tableau synoptique et schématique d'un mode de réalisation particulier du système de gestion informatique ;
- la figure 9 est une vue schématique d'un mode de réalisation du procédé de projection stéréoscopique.

### Description détaillée de modes de réalisation

Afin de pallier les inconvénients majeurs de la projection frontale, le procédé selon l'invention met avantageusement en oeuvre une projection par l'arrière de l'écran, dite rétro-projection.

Cette configuration permet de s'affranchir de la non-discrimination entre le déclenchement par la simple présence de l'observateur 1 et le déclenchement par un mouvement volontaire de l'observateur 1.

L'on se reporte tout d'abord à la figure 2.

La configuration représentée en figure 2 met simultanément en oeuvre une rétro-projection stéréoscopique, issue des projecteurs 7a et 7b sans que le corps de l'observateur 1 ne fasse obstruction aux faisceaux 4a et 4b.

Cette configuration permet à l'observateur 1, placé face à l'écran 3, d'avoir la sensation avantageuse d'être à l'intérieur même de l'image car son champ visuel peut être entièrement, si nécessaire, occupé par cette image, de par la taille de l'écran 3 et la faible distance 8 entre lui-même et l'image virtuelle jaillissante 2.

Cette configuration offre à l'observateur la possibilité d'exercer un excellent contrôle du déroulement du scénario interactif.

En effet, ce n'est pas la présence inopinée de l'ensemble du corps de l'observateur 1 qui est décelée par le capteur. C'est de sa main que l'observateur 1 déclenche volontairement l'action du capteur 5 qui réagit à ce geste à l'instant même où la main pénètre dans le volume de détection 6.

De ce fait, le dispositif de rétro-projection permet, par exemple, à un poisson, modélisé en image de synthèse, de rester quasiment immobile à faible distance apparente de l'observateur 1, ce qui permet de l'observer à loisir.

L'observateur aura l'illusion de voir un poisson filmé à la perfection, se comportant avec une docilité exceptionnelle.

Cette spécificité d'utilisation en rétro-projection est très avantageuse pour la réalisation d'« aquariums simulés » par exemple, et de manière générale, plus satisfaisante pour toute autre application à caractère didactique car elle permet une proximité avec l'image virtuelle jaillissante, impossible à obtenir avec une projection frontale.

Le ou les capteurs permettant le contrôle des modifications des scénarii, établissant ainsi la relation interactive, sont de type « barrière photo électrique » ou capteurs « de proximité » ou « de mouvements » ou de « présence » ou de tout autre type pouvant permettre une détection de mouvement dans l'espace.

La précision du ou des capteurs est avantageusement d'au moins 30 cm verticalement, 30 cm horizontalement et 30 cm en profondeur, créant ainsi un « volume de détection » d'un diamètre d'environ 30 cm.

En effet, s'il est préférable que la détection du mouvement soit extrêmement précise, de l'ordre du centimètre, l'expérimentation a démontré que le cerveau de l'observateur accepte comme crédible de «.toucher », voire de « tâtonner » dans une zone aux caractéristiques dimensionnelles citées ci-dessus.

Les demandeurs ont constaté qu'au-delà, la qualité de la relation interactive chute avec l'augmentation du diamètre du volume de détection.

Il est à noter que ce volume de détection peut être plus important dans l'axe vertical ce qui permet à un adulte aussi bien qu'à un enfant de contrôler une même image virtuelle jaillissante.

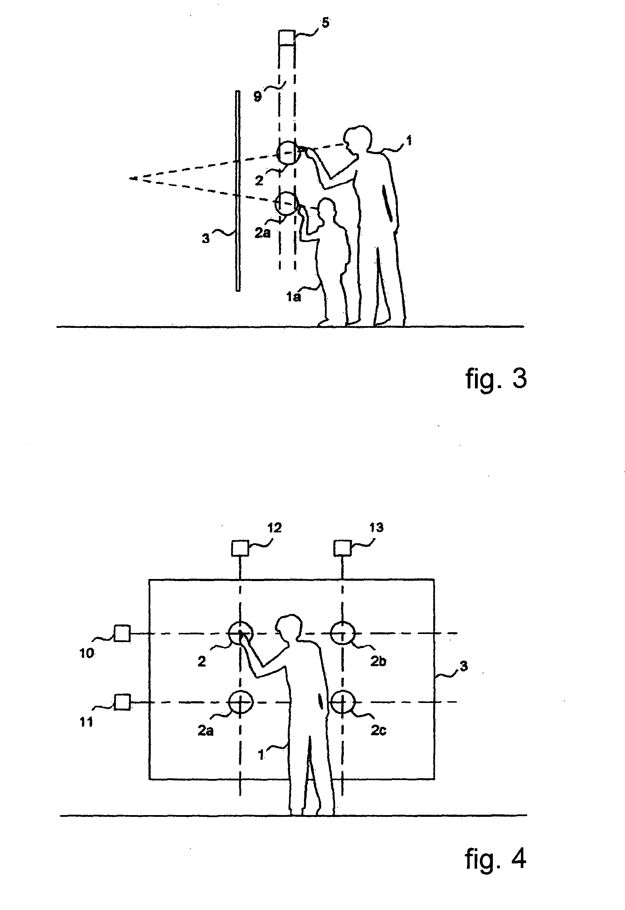

L'on se reporte maintenant à la figure 3, illustrant l'adaptabilité du procédé à des personnes de taille différente.

Sur cette figure 3, la même image virtuelle jaillissante 2 et 2a est effectivement perçue verticalement en 2 par un observateur adulte 1, placé face à l'écran 3, et simultanément perçue verticalement en 2a par un observateur enfant 1 a, placé face au même écran 3.

Cette perception d'une position spatiale multiple et simultanée d'une même image virtuelle jaillissante, pour des observateurs placés en des points de l'espace différents, est liée à une propriété particulière de l'image en relief qui va s'aligner dans l'axe du regard de chaque observateur, verticalement et horizontalement, chaque observateur ne voyant l'image virtuelle jaillissante que dans la position spatiale qui se trouve dans son propre axe visuel.

Du fait de cette propriété particulière, le même volume de détection vertical 9 peut être utilisé par des observateurs de taille sensiblement différente placés selon un axe vertical proche.

Ainsi, dans cette figure 3, le même volume de détection 9 issu du capteur 5 pourra être utilisé par les deux observateurs 1, 1 a, puisque la cellule 5 permettra l'action interactive, déclenchée par le geste de l'adulte 1 qui « touchera » l'image virtuelle jaillissante en 2, tout aussi bien que par le geste d'un enfant 1 a qui, lui, le percevant en 2a le « touchera » dans le même volume de détection vertical 9.

L'observateur qui effectuera le premier, un geste dans le volume de détection modifiera le scénario.

L'on se reporte maintenant à la figure 4.

Sur cette figure 4, deux capteurs 10 et 11 sont placés selon deux axes horizontaux, parallèlement à l'écran 3, à des hauteurs permettant de discriminer les deux volumes de détection horizontaux ainsi générés et deux autres capteurs 12 et 13 sont placés selon deux axes verticaux, parallèlement à l'écran 3, à un espacement permettant de discriminer les deux volumes de détection verticaux.

Cette configuration permet, par exemple, selon le programme informatique choisi, de générer, en combinant les axes verticaux et les axes horizontaux, un réseau de quatre volumes de détection correspondant aux images virtuelles 2, 2a, 2b et 2c permettant d'effectuer par un choix spatial, une première modification de scénario parmi de nombreuses combinaisons scénaristiques possibles.

Il est bien entendu possible de créer des réseaux extrêmement fins, de l'ordre du centimètre carré, par cette méthode, en utilisant des capteurs appropriés, de type capteurs à rayon laser par exemple.

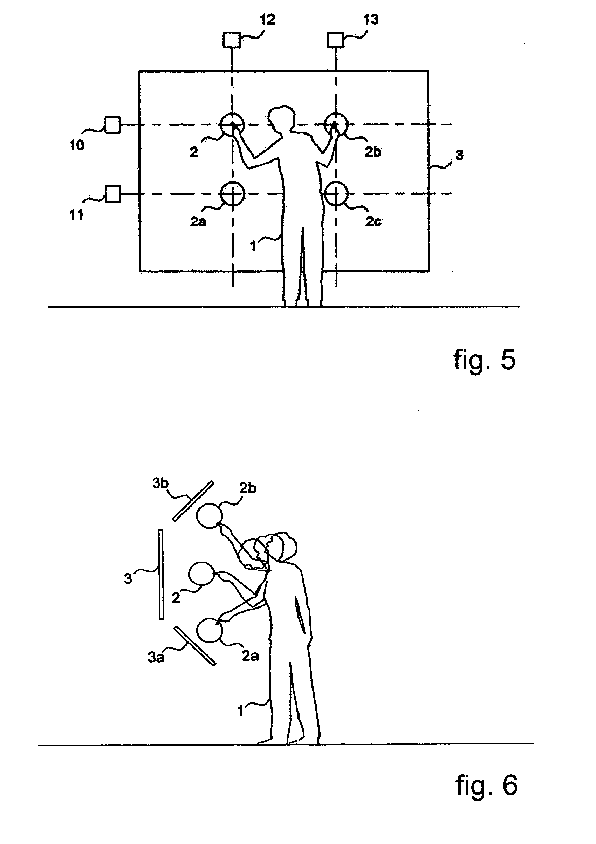

L'on se reporte maintenant à la figure 5.

Sur cette figure 5, l'implantation des capteurs est identique à celle de la figure 4, cependant, cette variante permet, selon le programme informatique choisi, des combinaisons particulières du mode de contrôle des scénarii.

Ainsi, l'observateur 1, placé face à l'écran 3, peut alternativement et/ou simultanément intervenir sur plusieurs volumes de détection, permettant ainsi des combinaisons scénaristiques différentes.

Une telle configuration peut permettre, par exemple, d'utiliser la combinaison de deux capteurs 12 et 10 pour contrôleur, en temps réel, la rotation de l'image, de la droite vers la gauche, et la combinaison de deux autres capteurs 13 et 10 pour contrôler la rotation de l'image de la gauche vers la droite, en effectuant alternativement un geste de la main gauche et/ou de la main droite dans les volumes de détection correspondant par exemple aux images virtuelles jaillissantes 2 et 2b.

D'autres combinaisons sont possibles par l'intermédiaire du capteur 11 correspondant aux images virtuelles jaillissantes 2a et 2c.

Le procédé peut mettre en oeuvre:
- un écran de type lenticulaire ou
- un écran permettant la diffusion d'images stéréoscopiques par filtre opérant un séquencement temporel oeil gauche/oeil droit des images, à vision par lunettes synchronisées à ce séquencement, ou
- un écran permettant la diffusion par changement séquencé de polarisation, à vision par lunettes à modification de polarisation séquencée, ou
- tout autre type d'écrans permettant la visualisation d'images en relief, animées.

Le procédé selon l'invention est compatible avec des écrans de type lenticulaire à vision relief sans lunettes pour des applications particulières où le mode de rétro-projection stéréoscopique ne serait pas approprié car nécessitant, par exemple, un volume de projection trop important à l'arrière de l'écran,

L'on se reporte maintenant à la figure 6.

Dans ce mode de réalisation, l'observateur 1 est sollicité par trois images virtuelles jaillissantes 2, 2a, 2b, issues de trois écrans 3, 3a et 3b de dimensions différentes et placés à des angles différents par rapport à l'observateur.

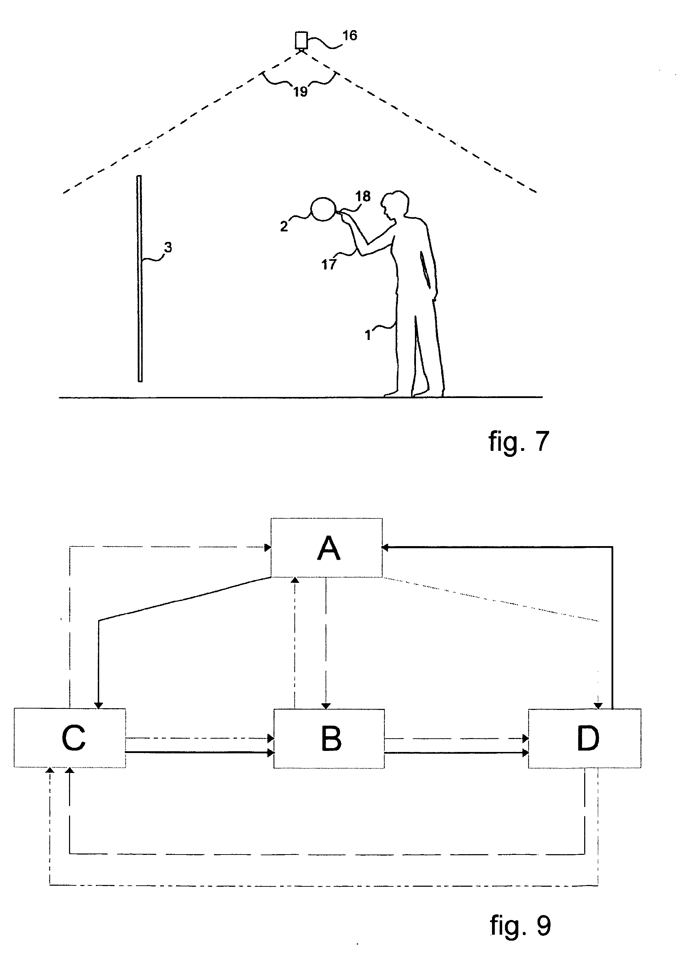

L'on se reporte maintenant à la figure 7.

Dans ce mode de réalisation, une caméra 16 est associée à des logiciels de reconnaissance de forme et/ou d'intelligence artificielle, permettant notamment de reconnaître et de discriminer le corps humain dans son ensemble, des parties distinctes composant ce corps, par exemple un membre 17 de l'observateur 1, avec lequel il sera en mesure d'effectuer un geste identifiable 18 envers l'image virtuelle jaillissante 2 issue de l'écran 3, geste distinct du déplacement de son corps dans l'espace.

L'observateur 1 se déplaçant librement dans le champ 19 de la caméra 16 reliée à un processeur équipé d'un logiciel permettant l'analyse des déplacements du corps et l'analyse des mouvements des membres, pourra, quelle que soit sa position spatiale et/ou sa gestuelle, selon le programme souhaité, contrôler la modification du scénario des images en relief.

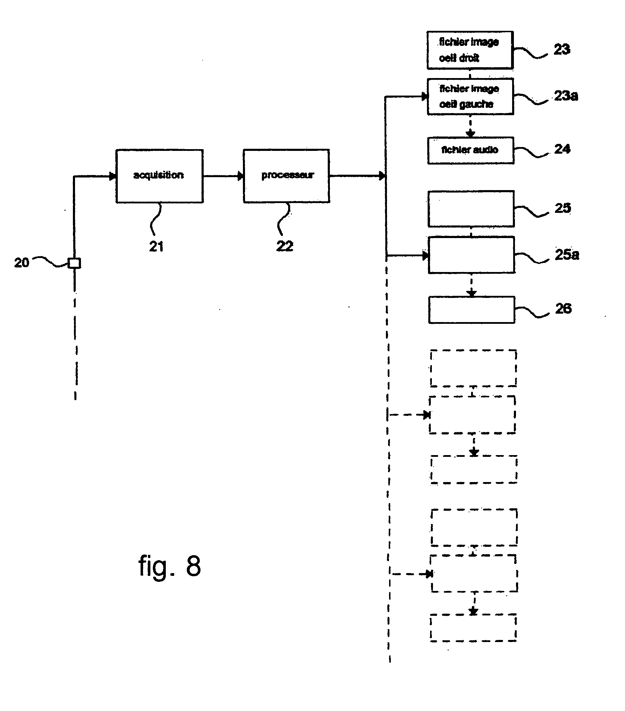

L'on se reporte maintenant à la figure 8.

Un capteur 20 reçoit l'information du mouvement et transmet cette information via une carte d'acquisition 21 au processeur 22 qui effectue ensuite les tâches requises, par exemple, la mise en lecture des fichiers image oeil droit 23 et oeil gauche 23a pré-calculés, synchronisés entre eux et du fichier audio 24 synchronisé avec les fichiers image, puis, par une nouvelle action sur le capteur et selon le programme établi, le processeur pourra effectuer la mise en lecture d'autres fichiers 25, 25a et 26, et ainsi de suite, selon le nombre de fichiers choisi.

L'on se reporte maintenant à la figure 9.

Dans le procédé schématisé en figure 9, la rétro-projection d'images en relief commence par une séquence A, par exemple l'arrivée d'un animal.

Lorsqu'un mouvement de l'observateur est détecté, un processeur va choisir, de manière aléatoire, la séquence d'images qui va suivre, parmi une liste de scenarii contenus dans une base de données. Afin de simplification, en figure 9, seuls trois scenarii B, C, D sont mentionnés. Il est entendu toutefois que le nombre de scenarii n'est pas limité à trois.

Le choix aléatoire entre les scenarii B, C, D peut être obtenu par exemple comme suit.

Dans une première mise en oeuvre, le choix aléatoire est obtenu par génération d'un nombre réel aléatoire inférieur à N+1, nombre dont la partie entière est le numéro d'ordre du scénario dans la liste de N scenarii.

Dans une deuxième mise en oeuvre, le choix aléatoire est obtenu par la génération d'un temps initial (par exemple le début de la projection de la séquence A) et la mesure de l'intervalle de temps, par nature aléatoire, séparant ce temps initial et l'instant de détection du premier mouvement de l'observateur.

Lorsque la deuxième séquence est affichée, le système détecte un nouveau mouvement de l'observateur, provoquant l'affichage d'une suite de séquences, excluant avantageusement celles qui viennent d'être projetées. Ainsi, par exemple :
- si la deuxième séquence était B, les séquences suivantes seront D, C, avant un retour à la séquence A (lignes en tirets simples en figure 8);
- si la deuxième séquence était C, les séquences suivantes seront B, D avant un retour à la séquence A (lignes en gras en figure 8).

Dans une autre mise en oeuvre, lorsque la deuxième séquence est projetée, le système détecte un nouveau mouvement de l'observateur, et le processeur va alors choisir, de manière aléatoire, la séquence d'images qui va suivre. Par exemple, lorsque la deuxième séquence projetée est B, la troisième séquence sera choisie de manière aléatoire parmi une liste de scenarii B1, B2,...BZ. Le choix aléatoire entre ces séquences B1, B2...BZ peut être obtenu par exemple comme décrit précédemment.

Les scénarii choisis aléatoirement peuvent être contenus dans une base de données.

Dans une autre mise en oeuvre, au moins une partie de ces scenarii sont calculés en temps réel. Pour renforcer encore le caractère aléatoire de la projection, le processeur peut calculer un nouveau scénario en temps réel pour la projection de la Nième séquence, N étant un nombre entier aléatoire. Dans une autre mise en oeuvre, le processeur peut calculer un nouveau scénario en temps réel pour la projection de la p.Nième séquence, p étant la période, N étant un nombre entier aléatoire.

Le procédé permet ainsi de conserver un effet de surprise pour les observateurs. Dans le même temps, l'interactivité permet la transmission d'informations aux observateurs. Par exemple, la séquence A, d'introduction, sera la rétro-projection d'un fossile vivant tel qu'un coelacanthe (Latimeria chalumnae).

Suite à la détection d'un mouvement d'un observateur, la deuxième séquence, choisie aléatoirement, pourra être :
- une séquence d'animation (fuite, comportement amical, comportement agressif, étonnement) ;
- une séquence d'information : rétro-projection du squelette seul du coelacanthe, ou d'une vue écorchée.

A la suite de la rétro-projection de cette deuxième séquence, la détection d'un mouvement d'un observateur permettra de même, la rétro-projection d'une séquence d'animation ou d'information, les séquences venant d'être projetées étant avantageusement non reprises.

Il est, bien entendu, possible d'effectuer des calculs d'images et de sons en temps réel, car les processeurs d'aujourd'hui possèdent des capacités de calcul permettant cette performance à faible coût, au lieu, comme c'est le cas dans le schéma synoptique de la figure 8, de commuter des fichiers pré-calculés.

Il convient cependant de préciser que l'utilisation de calcul en temps réel n'est pas toujours nécessaire et ne trouvera son utilité que dans des applications de type jeu vidéo ou, de manière générale, lorsque l'interactivité souhaitée requiert ce degré de sophistication.

Si l'on souhaite que l'interactivité se borne à être de type séquentiel, on utilisera un seul capteur permettant des modifications de scénarii dans un ordre pré-établi.

Si l'on souhaite que l'interactivité permette d'effectuer des combinaisons multiples de modifications de scénarii, on utilisera plusieurs capteurs ou un système de caméras.

Le processeur prendra en compte le nombre de capteurs et/ou leur type selon le programme informatique qui sera établi.

### Applications de l'invention

L'invention trouve des applications avantageuses dans les activités à caractère ludique et/ou didactique, par exemple jeux vidéo, centres de loisirs urbains, attractions destinées aux parcs d'attractions, secteurs éducatifs et particulièrement les expositions à caractère muséographique.

Une des applications industrielles possibles du procédé selon l'invention est de fournir la possibilité à des lieux d'exposition d'espèces aquatiques (aquariums), qui proposent à leurs visiteurs la vision d'espèces vivantes « communes » dans de « vrais » bassins, un complément permettant d'enrichir L'offre de leur programme d'exposition.

Il s'agira, pour ces aquariums d'offrir à leurs visiteurs la possibilité de « contempler » des espèces rares, voire éteintes, tels des poissons évoluant à de grandes profondeurs et de créer l'illusion que ces espèces sont sensibles à la présence du public ou à ses mouvements, et ce dans des aquariums totalement « simulés ».

Bien entendu, de nombreuses autres applications du procédé selon l'invention sont possibles tels, par exemple, la création de « zoos simulés » où l'observateur pourra, sans danger, se trouver au plus près d'animaux considérés conne trop dangereux pour être approchés de près et/ou sans barrière de protection.

De même, le procédé selon l'invention permet de nombreuses applications à caractère didactique telle la représentation d'espèces éteintes.

Ainsi, par exemple, il sera possible de créer l'illusion de voir de près le Dronte, ou Dodo de l'Ile Maurice, un animal mythique, disparu aux environs de 1740 et dont il n'existe aucune photographie, ou bien de reconstituer virtuellement d'autres espèces dites en danger ou en voie de disparition, telle, par exemple, une autre espèce tout aussi mythique le Caelacanthe, une espèce sous-marine vivant en grande profondeur, qui lorsqu'elle est mise en bassin, meurt par manque de pression.

La vie ou la survie de ces espèces représente une source d'intérêt et de préoccupations grandissante pour un nombre croissant de personnes du grand public.

Cette curiosité croissante est propice à un développement industriel du procédé selon l'invention.

### Avantages de l'invention

Lorsque l'observateur est sollicité à intervenir par la présence d'une image jaillissante, il effectue un mouvement en direction de cette image jaillissante qui provoque une modification instantanée de l'image et/ou du son, et ce sans recourir à des moyens de calculs informatiques particulièrement puissants.

En d'autres termes, l'invention permet, sur des calculateurs actuellement disponibles pour le grand public, et avec l'adjonction d'un ou plusieurs capteurs, de modifier le contenu d'un élément virtuel projeté en relief et d'un élément sonore associé.

Il devient ainsi possible de créer des « aquariums simulés » où une ou plusieurs espèces sous-marines peuvent être matérialisées en relief.

Avantageusement, les images sont produites par la technique dite « d'images de synthèse », technique qui permet un rendu parfaitement réaliste de l'image, créant ainsi, par exemple, l'illusion de voir un poisson réel qui aurait fait l'objet de prises de vues.

Cette utilisation de l'image de synthèse permet notamment de contrôler parfaitement la vélocité, la trajectoire et les mouvements particuliers des espèces, permettant une construction « scénaristique » qui correspondra à une observation « idéale » de l'espèce sous-marine, observation pratiquement impossible dans le cas d'une prise de vues filmée puisque les espèces réagissent, dans leur milieu naturel, de façon totalement aléatoire.

La sensation de présence de l'espèce est renforcée par l'utilisation de techniques de calcul de l'image en relief, permettant à celle-ci de « s'approcher » au plus près du regard des observateurs.

Le public a l'illusion d'agir sur le comportement de cette espèce par un geste du corps de l'observateur ou par sa simple position spatiale si une telle configuration est souhaitée.

Ainsi, par exemple, lorsque l'observateur « tend la main » dans l'intention de « toucher » ce qui est une image totalement « virtuelle », un capteur détecte le mouvement et transmet une information qui est instantanément traitée par le processeur relié au système de production ou de diffusion des images.

En conséquence, au mouvement de la main de l'observateur correspondra une réaction de l'espèce, par exemple la fuite.

Les inventeurs ont constaté, contre toute attente, que le processus permet d'établir une crédibilité paradoxale de l'observateur car, pour autant que son cerveau puisse douter de la réalité d'une « espèce vivante » qui vient « flotter » devant lui, cette perception « d'irréalité » bascule instantanément lorsque l'observateur « touche » un « objet » qui n'existe pas dans le domaine du réel.

L'observateur bascule un bref instant dans une perception irréelle où la « non réalité » prend le pas sur la réalité, lui faisant croire un instant à cette réalité fictive.

Il s'agit aussi de permettre, dans le cadre de l'utilisation du procédé selon l'invention, des scénarii à caractère « imprévisible » pour l'observateur, voire variable ou partiellement imprévisible, d'une fois à l'autre.

Ainsi, par exemple, si l'on utilise l'image virtuelle d'un poisson, celui-ci peut, dans un premier temps, s'approcher de l'observateur, comme intrigué par la présence humaine ce qui correspond à des comportements assez fréquemment observés par les plongeurs sous-marins.

Lorsque l'observateur tend la main, le poisson peut par exemple s'enfuir, pour ensuite revenir, paraissant chercher à établir un « contact » symbolique avec l'espèce humains.

Il peut à nouveau s'enfuir dans le cas d'un mouvement de l'observateur qui pourrait sembler plus menaçant parce que, par exemple, plus vif.

Le nombre de scénarii de ce type dont une partie au moins est imprévisible n'est limité que par l'imagination du scénariste et cela constitue une des caractéristiques avantageuses du procédé selon l'invention : permettre tous les scénarii imaginables par le scénariste mais restant en partie au moins inconnus à l'observateur tant que celui-ci n'a pas provoqué de changement de scénario.

Le procédé selon l'invention n'utilise pas uniquement, pour former les images en relief, des systèmes de projection stéréoscopique. Il peut également utiliser des écrans générant des images tels que, par exemple, les écrans munis de filtres dits « lenticulaires » qui permettent de visualiser une image en relief sans nécessiter le port de lunettes spécifiques.

La corrélation d'images en relief, produites en « images de synthèse » et d'un système de détection des mouvements permet à un observateur de contrôler de manière volontaire des modifications de scénario des images en relief, pour partie au moins imprévisibles par l'intermédiaire d'une « image virtuelle jaillissante » et ce, sans que son corps interfère avec la visualisation des images.

## Revendications

1. Procédé d'interaction avec une projection d'images en relief (2, 2a, 2b, 2c) selon un déroulement non devinable par le ou les observateurs (1), ce procédé comprenant une étape de détection par au moins un capteur (5) de mouvements d'un observateur (1) et une étape de traitement des données issues dudit capteur (5), **caractérisé en ce qu'**il comprend une étape de corrélation entre les données issues du capteur de mouvements et un déroulement non devinable de projection d'images, ce déroulement non devinable étant choisi parmi les scenarii contenus dans une base de données.

2. Procédé d'interaction avec une projection d'images en relief (2, 2a, 2b, 2c) selon un déroulement non devinable par le ou les observateurs (1), ce procédé comprenant une étape de détection par au moins un capteur (5) de mouvements d'un observateur (1) et une étape de traitement des données issues dudit capteur, **caractérisé en ce qu'**il comprend une étape de corrélation entre les données issues du capteur (5) de mouvements et un déroulement non devinable de projection d'images, ce déroulement d'images non devinable étant calculé en temps réel.

3. Procédé d'interaction avec une projection d'images en relief (2, 2a, 2b, 2c) selon la revendication 1 ou 2, **caractérisé en ce que** le scénario auditif est modifié de façon sensiblement synchrone au scénario visuel.

4. Dispositif d'interaction avec une projection d'images en relief selon un déroulement non devinable par le ou les observateurs (1), ce dispositif comprenant au moins un volume de détection (6, 9) de mouvements d'un observateur (1), ledit volume (6, 9) étant pourvu d'au moins un capteur (5) de mouvement, ce dispositif comprenant en outre des moyens de traitement des données issues dudit capteur de mouvement, **caractérisé en ce qu'**il comprend une base de données de scénarii prédéterminés de projection d'images en relief et des moyens aptes à assurer une corrélation entre les données issues du capteur de mouvement et un déroulement non devinable de projection d'images, ce déroulement non devinable étant choisi parmi les scénarii contenus dans la base de données.

5. Dispositif d'interaction avec une projection d'images en relief selon la revendication 4, **caractérisé en ce que** la projection des images en relief met en oeuvre un moyen choisi parmi le groupe comprenant les écrans lenticulaires, les écrans à changement séquence oeil droit/ oeil gauche, les écrans à changement séquencé de polarisation.

6. Dispositif d'interaction avec une projection d'images en relief selon la revendication 4 ou 5, **caractérisé en ce qu'**il comprend des moyens (4) de rétro projection stéréoscopiques.

7. Dispositif d'interaction avec une projection d'images en relief selon l'une quelconque des revendications 4 à 6, **caractérisé en ce qu'**il comprend au moins un volume de détection de mouvements disposé entre l'emplacement prédéterminé du corps du ou des observateurs et un écran de projection des images.

8. Dispositif d'interaction avec une projection d'images en relief selon l'une quelconque des revendications 4 à 7, **caractérisé en ce que** ledit capteur (5) de mouvement est choisi parmi le groupe comprenant les barrières photo électriques, les capteurs de proximité, les capteurs de présence.

9. Dispositif d'interaction avec une projection d'images en relief selon l'une quelconque des revendications 4 à 8, **caractérisé en ce que** ledit capteur est une caméra (6), le dispositif comprenant des moyens de reconnaissance de forme.

10. Dispositif d'interaction avec une projection d'images en relief selon l'une quelconque des revendications 4 à 8, **caractérisé en ce qu'**il comprend quatre volumes de détection de mouvement, deux volumes (10, 11) étant disposés sensiblement suivant un axe horizontal, deux autres (12, 13) volumes étant disposés suivant un axe sensiblement vertical.

11. Dispositif d'interaction avec une projection d'images en relief selon l'une quelconque des revendications 4 à 8, **caractérisé en ce qu'**il comprend au moins deux écrans de projection d'images en relief, au moins un des écrans n'étant pas perpendiculaire au sol.

12. Dispositif selon l'une quelconque des revendications 4 à 11, **caractérisé en ce qu'**il comprend des moyens de synthèse d'images ou de projection d'images de synthèse, ces images étant projetées en relief selon un déroulement non devinable.
